(19) Europäisches Patentamt
European Patent Office
Office européen des brevets

(11) **EP 2 009 592 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(51) Int Cl.:
***G06T 11/00*** *(2006.01)*

(21) Anmeldenummer: **08011401.0**

(22) Anmeldetag: **24.06.2008**

(54) **Verfahren zur Streukorrektur von röntgentomografischen Daten**

Method for scatter correction of x-ray tomography data

Procédé de correction du rayonnement diffusé de données radiographiques

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.06.2007 EP 07012409**
**25.06.2007 CH 10112007**

(43) Veröffentlichungstag der Anmeldung:
**31.12.2008 Patentblatt 2009/01**

(73) Patentinhaber: **EMPA Eidgenössische Materialprüfungs- und Forschungsanstalt**
**8600 Dübendorf (CH)**

(72) Erfinder:
• **Thierry, Raphael**
**68870 Brinckheim (FR)**
• **Miceli, Alice**
**8600 Dübendorf (CH)**
• **Flisch, Alexander**
**8471 Oberwil (Dägerlen) (CH)**
• **Sennhauser, Urs**
**8305 Dietlikon (CH)**

(74) Vertreter: **Schmauder & Partner AG**
**Patent- & Markenanwälte VSP**
**Zwängiweg 7**
**8038 Zürich (CH)**

(56) Entgegenhaltungen:
**EP-A1- 1 566 771**

• **YIANNIS KYRIAKOU ET AL: "Combining deterministic and Monte Carlo calculations for fast estimation of scatter intensities in CT; Combining deterministic and Monte Carlo methods", PHYSICS IN MEDICINE AND BIOLOGY, TAYLOR AND FRANCIS LTD. LONDON, GB, Bd. 51, Nr. 18, 21. September 2006 (2006-09-21), Seiten 4567-4586, XP020095934, ISSN: 0031-9155, DOI: DOI: 10.1088/0031-9155/51/18/008**
• **WERLING A ET AL: "Fast implementation of the single scatter simulation algorithm and its use in iterative image reconstruction of PET data", PHYSICS IN MEDICINE AND BIOLOGY, TAYLOR AND FRANCIS LTD. LONDON, GB, Bd. 47, Nr. 16, 1. August 2002 (2002-08-01), Seiten 2947-2960, XP002318421, ISSN: 0031-9155, DOI: DOI: 10.1088/0031-9155/47/16/310**

## Beschreibung

<u>Technisches Gebiet</u>

Die Erfindung bezieht sich auf das Gebiet der Röntgentomografie, insbesondere auf ein Verfahren, ein Datenverarbeitungssystem und ein Computerprogramm zur Streukorrektur von röntgentomografischen Daten.

<u>Stand der Technik</u>

Die dreidimensionale Computertomografie (CT) mit einem konusförmigen Röntgenstrahlenbündel (englisch: "Cone-Beam CT") und einem Flächendetektor erlaubt im Vergleich zu einem zweidimensionalen Verfahren eine schnellere Aufnahme des Tomogramms. Allerdings steigt mit zunehmender Fläche des Flächendetektors auch der Anteil störender Streustrahlung am Detektor. Dieses Phänomen ist bei nichtmedizinischen CT-Anwendungen wie beispielsweise der CT von Maschinenteilen besonders ausgeprägt, da Metalle die Röntgenstrahlen wesentlich stärker streuen als biologisches Gewebe. Die auf den Detektor fallende Streustrahlung führt zu einem in aller Regel nicht uniformen Hintergrundsignal, das bei der Rekonstruktion eines Abbildes des bestrahlten Objektes zu Artefakten führt. Dementsprechend gibt es bereits zahlreiche Ansätze, um an röntgentomografischen Daten eine Korrektur bezüglich der Streuung vorzunehmen.

Beispielsweise ist in der US 6,163,589 ein Korrekturverfahren beschrieben, das auf einer Monte-Carlo-Simulation des Streusignals eines bestrahlten Objektes beruht. Dabei wird aus einem Satz von röntgentomografisch gemessenen Projektionsdaten ein anfängliches 3D-Abbild des Objektes rekonstruiert. Danach wird aufgrund dieses anfänglichen 3D-Abbildes das zugehörige Streusignal simuliert, welches anschliessend zur Streukorrektur der gemessenen Projektionsdaten verwendet wird. Aus den so gewonnenen korrigierten Projektionsdaten wird schliesslich ein streukorrigiertes 3D-Abbild rekonstruiert. Allerdings erwies sich dieser Ansatz insbesondere für Objekte mit komplexen Formen als sehr rechenintensiv.

Für Positronen-Emissions-Tomographie (PET) wird beispielsweise in WERLING A ET AL: "Fast implementation of the single scatter simulation algorithm and its use in iterative image reconstruction of PET data", PHYSICS IN MEDICINE AND BIOLOGY, TALYOR AND FRANCIS LTD. LONDON, GB, Bd. 47, Nr. 16, 1. August 2002, Seiten 2947-2960. auch die Integration der Korrektur der EinfachStreuung in ein statistisches, iteratives Rekonstruktionsverfahren beschrieben. Allerdings genügt dies im Allgemeinen für CT Anwendungen nicht, da die Mehrfach-Streuung nicht berücksichtigt wird.

Ein anderes Verfahren zur Streukorrektur ist in US 2005/0185753 A1 beschrieben. Dort wurde vorgeschlagen, zunächst eine voxelisierte Darstellung des anfänglichen 3D-Abbildes zu konstruieren und danach durch deterministische Simulation der Einfachstreuung an der besagten voxelisierten Darstellung ein Einfachstreuprofil zu berechnen. Zur Ermittlung des Gesamtstreuprofils, welches nebst der Einfachstreuung auch Beiträge von Mehrfachstreuung enthält, wird in US 2005/0185753 A1 ein multiplikativer Korrekturansatz vorgeschlagen, bei dem das Gesamt-Streuprofil durch Multiplikation des Einfach-Streuprofils mit einem Korrekturfaktor berechnet wird. Mit Hilfe dieses approximierten Gesamtstreuprofils wird anschliessend ein Satz von streukorrigierten Projektionsdaten ermittelt, um daraus ein streukorrigiertes 3D-Abbild zu berechnen. Nachteilig bei dieser Methode ist jedoch, dass die Mehrfachstreuung in aller Regel ein ganz anderes Profil als die Einfachstreuung hat, sodass der multiplikative Korrekturansatz eine zu starke Vereinfachung bedeutet.

<u>Darstellung der Erfindung</u>

Aufgabe der Erfindung ist es demnach, ein verbessertes Verfahren zur Streukor rektur von röntgentomografischen Daten anzugeben, mit dem insbesondere die obigen Nachteile vermieden werden.

Diese Aufgabe wird erfindungsgemäss gelöst durch das im Anspruch 1 definierte Verfahren. Demnach umfasst das erfindungsgemässe Verfahren die folgenden Schritte:

a) Rekonstruktion eines anfänglichen 3D-Abbildes eines Objektes aus einem Satz von röntgentomografisch gemessenen Projektionsdaten;
b) Berechnung eines Satzes von simulierten Projektionsdaten aufgrund des anfänglichen 3D-Abbildes oder eines Modells desselben, wobei die simulierten Projektionsdaten die Summe eines Transmissionsbeitrags und eines Streubeitrags sind;
c) Berechnung eines Satzes von korrigierten Projektionsdaten durch Subtraktion der simulierten Projektionsdaten von den gemessenen Projektionsdaten;
d) Rekonstruktion eines korrigierten 3D-Abbildes aus dem Satz von korrigierten Projektionsdaten;
e) falls ein zuvor definiertes Wiederholungskriterium erfüllt ist: Wiederholung der Schritte b) bis d), wobei für Schritt b) das zuletzt gewonnene korrigierte 3D-Abbild anstelle des anfänglichen 3D-Abbildes oder Modells desselben verwendet wird;

wobei

- der Transmissionsbeitrag durch eine deterministische Simulation der Photonentransmission von einer Punktquelle durch eine erste voxelisierte Darstellung des jeweiligen 3D-Abbildes oder Modells desselben hindurch auf eine Detektorfläche D berechnet wird;
- der Streubeitrag einen Einfach-Streubeitrag umfasst, der durch zumindest eine deterministische Simulation der Einfachstreuung von der Punktquelle an einer zweiten voxelisierten Darstellung des jeweiligen 3D-Abbildes oder Modells desselben auf die Detektorfläche D berechnet wird; und
- wobei die Anzahl von Voxel der zweiten voxelisierten Darstellung geringer ist als die Anzahl von Voxel der ersten voxelisierten Darstellung,

und wobei die Berechnung des Einfach-Streubeitrags umfasst:

- einem jeden Voxel $V_{ijk}^{(2)}$ der zweiten voxelisierten Darstellung $\{V_{ijk}^{(2)}\}$ wird ein Satz von unabhängig zufällig ausgewählten Pixeln $\{P_{mn}\}$ der Detektorfläche D zugeordnet;
- es wird zumindest eine erste deterministische Simulation der Einfachstreuung über sämtliche Voxel durchgeführt, wobei für jedes Voxel nur die jeweils zugeordneten Pixel berücksichtigt werden;
- anschliessend wird gegebenenfalls eine Filterung des so gewonnenen Simulationsergebnisses vorgenommen; und
- das - gegebenenfalls gefilterte - Simulationsergebnis wird als Einfach-Streubeitrag übernommen.

Für die Berechnung von simulierten Projektionsdaten gemäss Schritt b) kann das im Schritt a) rekonstruierte, anfängliche 3D-Abbild des ausgemessenen Objektes verwendet werden. Alternativ hierzu kann jedoch ein Modell des 3D-Abbildes bzw. des Objektes verwendet werden. In manchen Fällen sind beispielsweise CAD-Daten des Objektes verfügbar, die in manchen gängigen Formaten wie z.B. STL-Daten vorliegen können; eine weitere Möglichkeit sind einfache geometrische Objekte (sog. "Primitivformen).

Als Wiederholungskriterium kann insbesondere eine bestimmte Anzahl von Wiederholungen vorgegeben werden. Alternativ kann als Wiederholungskriterium beispielsweise das Überschreiten eines vorgegebenen Masses der Abweichung zwischen den in aufeinanderfolgenden Wiederholungen simulierten Projektionsdaten verwendet werden. Falls im Schritt a) statt des anfänglichen 3D-Abbildes ein Modell desselben verwendet wird, erübrigt sich eine Wiederholung der Schritte b) bis d), d.h. das Wiederholungskriterium ist als "nicht erfüllt" zu setzen.

Bevorzugte Ausgestaltungen sind in den abhängigen Ansprüchen definiert.

Kurze Beschreibung der Zeichnungen

Ausführungsbeispiele der Erfindung werden nachfolgend anhand der Zeichnungen näher beschrieben, dabei zeigen:

Fig. 1    die geometrische Situation und die für die Simulation von PhotonenTrajektorien verwendeten Grössen, (a) in perspektivischer Darstellung, (b) in einem vergrösserten Ausschnitt davon, und (c) in Draufsicht auf die x-y-Ebene;

Fig. 2    eine perspektivische schematische Darstellung der Einfachstreuung, mit zufällig ausgelosten Detektorelementen (schattiert), welche nach einer Wechselwirkung im Voxel A getroffen werden;

Fig. 3    ein Flussdiagramm einer Ausführungsform des Verfahrens zur Streukorrektur von röntgentomografischen Daten;

Fig. 4    das Prinzip der Methode mit interpoliertem adaptivem Gitter

Fig. 5    eine schematische Darstellung der Streusimulation an einer Ersatzform, (a) als perspektivische Gesamtansicht, und (b) in einem vergrösserten Ausschnitt davon; und

Fig. 6    eine schematische Darstellung der Streusimulation an einer Ersatzform, (a) als Seitenansicht in x-Richtung, und (b) als Ansicht von der Röntgenquelle zur Ersatzform.

Wege zur Ausführung der Erfindung

1. Physikalische Grundlagen

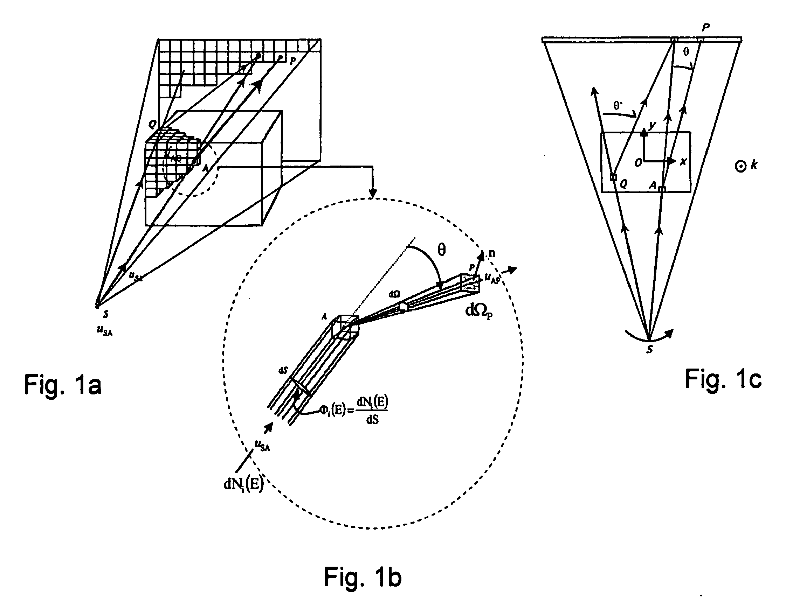

Ein Röntgenstrahl kann als elektromagnetische Welle oder als Teilchenstrom von Photonen aufgefasst werden (Welle-Teilchen-Dualismus). Die Ablenkung eines Teilchens unter dem Streuwinkel θ zur ursprünglichen Bewegungsrichtung infolge der Wechselwirkung mit einem Streuzentrum heisst Streuung. Der ungestreute Röntgenstrahl heisst Primärstrahl. Bei den hier untersuchten Wechselwirkungen trifft ein Photon auf die Hüllenelektronen eines Atoms im Objektmaterial. Die bei den nachfolgend betrachteten Streuvorgängen massgebliche Geometrie ist in Fig. 1 dargestellt. Ein kollimierter pyramidenförmiger Strahl auf der Rotationsachse, welche im Zentrum der x-y-Ebenen parallel zur z-Achse verläuft, verlässt das System aus dem punktförmigem Fokus. Das Photon wechselwirkt im Voxel A des voxelisierten Bildes. Die Richtung ändert sich dabei von $u_{SA}$ nach $u_{AP}$ und trifft den Detektor im Detektorelement P.

*1.1 Wirkungsquerschnitte*

Bei der Streuung spielt der Begriff des differentiellen Wirkungsquerschnitts eine zentrale Rolle. Er ist proportional zur Wahrscheinlichkeit, dass ein Teilchen in ein bestimmtes Raumwinkelelement gestreut wird und hat die Dimension einer Fläche

$$\left(\frac{d\sigma}{d\Omega}\right) = \frac{\text{Zahl der pro Sekunde nach } \Delta\Omega \text{ gestreuten Photonen}}{\left[\text{Einfallender Teilchenfluss}\right]\Delta\Omega} \tag{1}$$

wobei $\Delta\Omega$ einen Raumwinkel in Steradian (sr) bezeichnet. Häufig wird für den differentiellen Wirkungsquerschnitt auch die Einheit barn/sr mit 1 barn = $10^{-24}$ cm² verwendet.
Der Zusammenhang zwischen dem Wirkungsquerschnitt $\sigma_i$ eines Effekts i, wobei der Index i = {coh, incoh} für kohärente bzw. inkohärente Streuung steht, und dem differentiellen Wirkungsquerschnitt sowie dem Abschwächungskoeffizienten $\mu_i$ ist gegeben durch:

$$\mu_i = n_a . \sigma_i = n_a \int_{\theta=0}^{\pi} 2\pi \sin\theta \left(\frac{d\sigma}{d\Omega}\right)(\theta) d\theta \tag{2}$$

Mit $n_a$ ($[n_a]$ = Atome cm$^{-3}$) wird die atomare Teilchendichte bezeichnet. Der Wirkungsquerschnitt für die Streuung an einem Atom ergibt sich zu

$$\sigma_s = \sigma_{coh} + \sigma_{incoh}. \tag{3}$$

Bei den nachfolgenden Betrachtungen der beitragenden Wirkungsquerschnitte ist vor allem die Vorwärtsstreuung wichtig, weil in dieser Richtung der Detektor steht.

*1.2 Kohärente (Rayleigh) Streuung*

Bei der kohärenten oder Rayleigh Streuung findet ein Impuls- aber kein Energie-übertrag auf das Targetatom statt. Die energieabhängige Richtungsverteilung der kohärenten Streuung ergibt sich aus dem differentiellen Wirkungsquerschnitt:

$$\left(\frac{d\sigma_{coh}}{d\Omega}\right) = \frac{r_0^2}{2}\left(1 + \cos^2\theta\right) f(E, Z, \theta)^2 \tag{4}$$

wobei $r_0$ dem klassischen Elektronenradius entspricht und *f* für den atomaren Formfaktor steht. Er berücksichtigt den Beitrag der einzelnen Hüllenelektronen zur kohärent gestreuten Welle. Es handelt sich um eine schnell mit der Photonenenergie fallende Funktion, weshalb klassische Streuung nur im unteren Energiebereich vorkommt. Für verschwindende Streuwinkel wird der atomare Formfaktor maximal, d.h. f(0=0) = Z, deshalb ist kohärente Streuung überwiegend vorwärts gerichtet und ihr Einfluss steigt mit der Ordnungszahl Z. Für Ordnungszahlen Z < 100 sind die Werte für den atomaren Formfaktor beispielsweise in der NIST Datenbank (http://physics.nist.gov/PhysRefData) tabelliert und können frei aus dem Internet heruntergeladen werden.

### 1.3 Inkohärente (Compton) Streuung

Bei der inkohärenten oder Compton-Streuung überträgt das gestreute Photon Energie (E) an das Rückstoselektron. Nach dem Streuprozess wird die Energie $E_{Co}$ der gestreuten Photonen durch die folgende Gleichung berechnet:

$$E_{Co} = \frac{E}{\left(1 + \frac{E}{m_e c^2}(1 - \cos\theta)\right)} \qquad (5)$$

Der energieabhängige, differentielle Wirkungsquerschnitt der inkohärenten Streuung kann in zwei Faktoren zerlegt werden:

$$\left(\frac{d\sigma_{incoh}}{d\Omega}\right) = \left(\frac{d\sigma_{KN}}{d\Omega}\right) S(E, Z, \theta) \qquad (6)$$

wobei der erste Teil dem Klein-Nishina Streuquerschnitt entspricht, welcher die Winkelverteilung an einem freien Elektron beschreibt und in Vorwärtsrichtung θ=0 sein Maximum erreicht:

$$\frac{d\sigma_{KN}(\theta, E)}{d\Omega} = \frac{r_e^2}{2}\left(\frac{E_{Co}}{E}\right)^2\left(\frac{E_{Co}}{E} + \frac{E}{E_{Co}} - \sin^2\theta\right) \qquad (7)$$

Der zweite Faktor heisst inkohärente Streufunktion S(E, Z, θ) und wird auf Englisch als "Incoherent Scattering Function" (ISF) bezeichnet. Er berücksichtigt die Streuung an Z Elektronen, die in einem Atom gebunden sind und ist auch in NIST tabelliert zu finden. Bemerkenswert ist, dass durch den atomaren Strukturfaktor die Vorwärtsstreuung komplett unterdrückt wird, d.h. für θ=0 ist S(E, Z θ=0) = 0.

Bisher wurde nur die Wechselwirkung an einzelnen Atomen betrachtet. Die Bestimmung der Intensitäts-, Winkel- und Energieverteilung der auftretenden Strahlung nach einem realen Objekt erfordert die Berücksichtigung aller beteiligten Stosspartner. Solche komplexen Berechnungen von Einfach- und Mehrfachstreuungen im Objekt können beispielsweise mit Monte-Carlo Simulationen durchgeführt werden.

Die Werte von f (Formfaktor FF) und S (Streufunktion ISF) werden durch eine Interpolation von tabellierten Daten berechnet. Diese Daten können frei aus dem Internet herunter geladen werden. Im vorliegenden Fall werden die Daten von EPDL97 verwendet, die auch in einigen Monte-Carlo Simulatoren (inkl. "Geant4", siehe http://geant4.web.cern.ch/geant4/) benutzt werden. Falls die Materialien aus mehreren Elementen gebildet sind (Legierung), werden die FF und ISF durch die additive Regel gegeben:

$$[f(x, Z)]^2 = \sum_{i=1}^{N} \omega_i [f(x, Z_i)]^2$$

$$S(x, Z) = \sum_{i=1}^{N} \omega_i [S(x, Z_i)] \qquad (8)$$

wobei $\omega_i$ der prozentuale Anteil des Elements mit Ordnungszahl $Z_i$ ist.

## 2. Streustrahlkorrektur

Streustrahlkorrekturen basieren auf anlagentechnischen oder rechnergestützten Lösungen. Einsatzgebiet, Aufnahmegeometrie, Kosten und Zeitaufwand sind mitbestimmend bei der Auswahl eines oder mehrerer Verfahren. Rein anlagetechnische Ansätze zur Streukorrektur sind jedoch in der industriellen Computertomographie nur bedingt einsetzbar. Insbesondere die verstärkt auftretende Streustrahlung der 3D-CT Aufnahmetechnik macht Korrekturverfahren im Anschluss an den Messvorgang erforderlich.

### 2.1 Rechnergestützte Lösungen

Artefakte, die durch Streustrahlung verursacht sind, ähneln denen, die durch Strahlaufhärtung entstehen. Für eine rechnergestützte Korrektur muss man allerdings einen wesentlichen Unterschied berücksichtigen: Im Gegensatz zur Strahlaufhärtung hängt die Streustrahlung entscheidend von der Aufnahmegeometrie und der Objektgeometrie im Messfeld ab. Eine Software-Korrektur kann wie folgt in den Rekonstruktionsprozess integriert werden. Weil Primär- und Streustrahlung zwei sich gegenseitig ausschliessende Klassen bilden, kann die am Detektor gemessene Intensität $I$ als Summe beider Anteile geschrieben werden. Die Intensitäten variieren mit dem Aufnahmewinkel, und für den Projektionswert ergibt sich

$$P_{scat} = -\ln\left(\frac{I_{tot}}{I_0}\right) = -\ln\left(\frac{I_p + I_s}{I_0}\right)$$

Ohne Korrektur erhält man einen nichtlinearen Verlauf der Kennlinie ähnlich dem für die Strahlaufhärtung. Simulationen oder Experimente liefern Streudaten $\tilde{I}_s$, die zur Korrektur herangezogen werden können

$$\tilde{P}_{scat,corr} = -\ln\left(\frac{I_p + \left(I_s - \tilde{I}\right)}{I_0}\right)$$

### 2.2 Monte-Carlo-Methoden

Die Monte-Carlo-Technik ist auf vielfältige und komplexe Transportprobleme anwendbar. Sie ist die am häufigsten verwendete numerische Simulation im Bereich der Röntgenstrahlung und wird in der Literatur als Referenz für die Tauglichkeit anderer Modellrechnungen herangezogen. Durch eine Monte-Carlo-Simulation wird die Wahrscheinlichkeitsverteilung der Streustrahlung auf dem Detektor approximiert. Der Lebensweg eines einzelnen Photons ist durch folgende Merkmale bestimmt: sein Anfangszustand, seine freie Weglänge, die Art der Wechselwirkung und die Winkelverteilung bei der Streuung. Für eine hinreichend gute Statistik (grosses Signal-Rausch-Verhältnis) ist die Simulation einer grossen Photonenzahl erforderlich. Diese stochastische Methode wird damit sehr rechenintensiv und für Anwendungen der zerstörungsfreien Prüfung, und für CT überhaupt, nicht geeignet. Dabei lassen sich nur Objekte simulieren, die durch eine Liste von geometrischen Primitiven (Ellipsen, Kegel, Parallelepipede, Zylinder, ...) und deren logischen Verknüpfungen (Addition, Subtraktion, Kreuzung, ...) modelliert werden können. Folglich können komplexere Objekte wie sie beispielsweise häufig in Gussteilen vorkommen, mit der obigen, "klassischen" Monte-Carlo-Technik nicht simuliert werden.

Voxel-basierte Monte-Carlo-Methoden erlauben hingegen, komplexere Objekte und ihre Einflüsse zu behandeln. Diese Methoden werden meistens für spezielle Anwendungen implementiert, sind jedoch noch Forschungswerkzeuge. In der Literatur sind davon nur zwei veröffentlicht worden [Kyr-06], [Col-04]. Grund dafür ist der grosse Aufwand, um solche optimierte Monte-Carlo-Methoden zu implementieren.

### 2.3 Optimierte Monte-Carlo-Methode (Gewichete Methode)

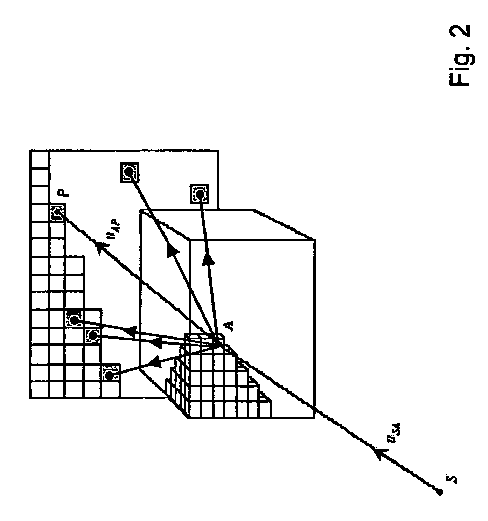

Der Nachteil der klassischen Monte-Carlo-Methode liegt auf der Hand. Eine Vielzahl von Photonentrajektorien wird berechnet, ohne dass es zu einem Streusignalbeitrag kommt. Die Optimierung setzt genau an diesem Punkt an: An jedem Ort V (Objekt-Voxel) einer Wechselwirkung des Photons mit der Energie E wird vor der Wechselwirkung die Wahrscheinlichkeit dafür berechnet, dass das Photon von P aus die Detektorelemente des Detektors trifft. Man "forciert" also das gestreute Photon, mit einer Liste von zufällig ausgelosten Detektorelementen zu interagieren (Fig. 2), weshalb die Methode auf Englisch "forced detection" heisst. Die Effizienz dieser Methode hängt verständlicherweise von der spezifischen Art der Implementierung ab. Die gewichtete Monte-Carlo-Methode ist bei der Berechnung zeitaufwendiger, stellt jedoch sicher, dass pro gerechnetem Photon und Wechselwirkungsvorgang mindestens ein Treffer berücksichtigt wird, und ist dadurch effektiver als die klassische Monte-Carlo-Methode.

### 3. Hybridmethode für die gesamte Streukorrektur

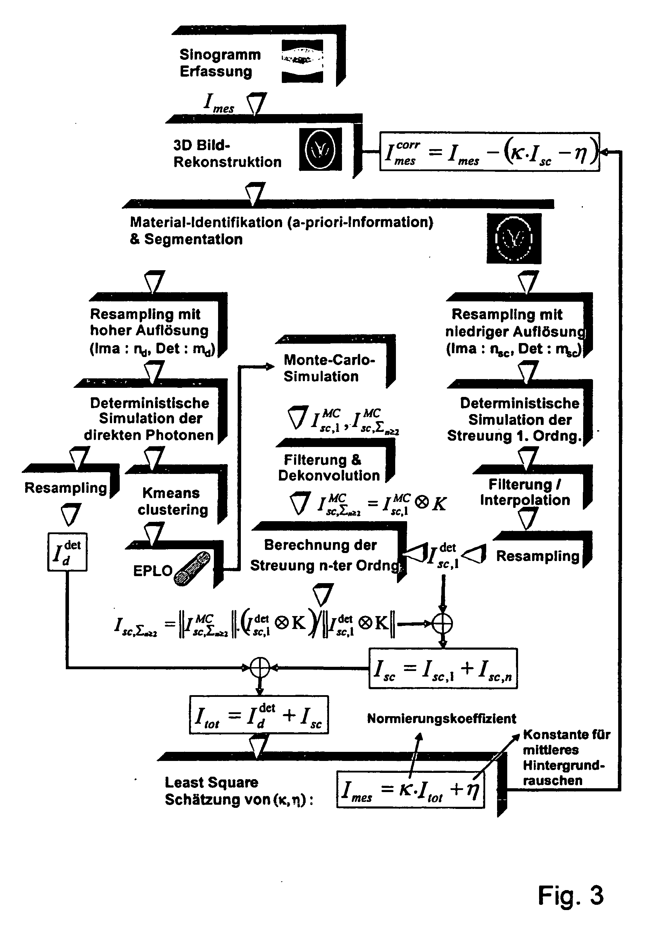

Die hier vorgeschlagene Methode beruht auf drei Grundpfeilern, wie im Flussdiagramm der Fig. 3 dargestellt.
Der erste Pfeiler betrifft die Berechnung der primären Photonen. Hierfür wird ein an sich bekanntes Verfahren eingesetzt, nämlich ein optimierter inkrementierter Siddon 3D Ray-Tracing-Algorithmus. Dieser beinhaltet eine numerische Lösung des Integrals für den energie- und materialabhängigen Absorptionsterm $\mu(E,Z)$ von einem Punkt A bis zu einem Punkt B, wobei diese Punkte inner- oder ausserhalb des Objekts liegen können:

$$\int_{A}^{B} \mu(E,Z,l)dl \approx \sum_{V_{ijk} \in \{A,B\}} \mu(E,Z,V_{ijk})dl_{ijk}$$

Der zweite Pfeiler betrifft die Berechnung der Photonen, die nur eine Wechselwirkung mit dem Objekt gehabt haben. Er wird im Abschnitt 3.1 erläutert.
Der dritte Pfeiler betrifft die Berechnung der Photonen, die zwei oder mehr Wechselwirkungen mit dem Objekt gehabt haben. Er wird in Abschnitt 3.4 erläutert.
Das nichtkorrigierte Bild wird mit zwei verschiedenen Ortsauflösungen in eine Vielzahl von Voxel segmentiert. Jedes Voxel trägt die Information über die lokale Dichte und ist mit einem bestimmten Material (bzw. Legierung) identifiziert (bzw. mit den Gewichtsanteilen der Legierungskomponenten). Die feinere Ortsauflösung wird für die Primärintensitätberechung sowie für die Bestimmung eines aus primitiven geometrischen Formen gebildeten Objektes mit äquivalenter Weglänge (englisch: "Equivalent Path-Length Object", EPLO), nachfolgend auch "Ersatzform" genannt, verwendet.
Die gröbere Ortsauflösung dient zur Streuungsintensitätsberechung erster Ordnung. Beide Intensitäten werden am Ende des Prozesses wieder auf die nötige Ortsauflösung mittels kubischer Splines interpoliert (englisch: "resampling").
Falls die Streuintensität höherer Ordnung nicht vernachlässigbar ist, wird hierfür die Streuintensität des EPLO mit einem Monte-Carlo CT Simulator berechnet (siehe Abschnitt 3.4).
Der Nutzen der Verwendung eines EPLO beruht darauf, dass es eine ähnliche Mehrfachstreuintensität wie das untersuchte Original-Objekt hat. Man kann durch eine Dekonvolution zwischen Mehrfach- und Einfachstreuintensität einen Konvolutions- oder Faltungskern K identifizieren. Dabei setzt man voraus, dass die Mehrfachstreuung als eine Konvolution von einfacher Streuung betrachtet werden kann.
Zuletzt werden die Intensitäten der drei Beiträge, d.h. die Intensitäten der transmittierten, einfach gestreuten und mehrfach gestreuten Photonen addiert und mittels einer Anpassungsmethode der kleinsten Quadrate im Original-Sinogramm identifiziert (Quantifizierungskonstante $\kappa$). Die Aufbaustrahlung wird durch ein konstantes Rauschen ($\eta$) modelliert. Der Beitrag der Streuung wird im Sinogramm subtrahiert und die Schleife kommt wieder in die Rekonstruktion zurück.

### 3.1 Die volle deterministische Berechnung der Einfachstreuung

Das hier vorgestellte Streustrahlenmodell, welches Objektformen berücksichtigt, beruht auf den oben geschilderten differentiellen Wirkungsquerschnittsmodellen (FF und ISF). Ein zugehöriger Computer-Programmcode wurde im Hinblick auf industrielle Anwendungen geschrieben [Det-04], sollte aber problemlos auch für medizinische CT anwendbar sein.
In die Berechnung der Streuverteilungen fliessen nur die Kenntnisse über die Energieverteilung (was die Möglichkeit eröffnet, auch einen polychromatischen Strahl zu berücksichtigen), Materialbeschaffenheit des Objekts und die durchstrahlte Weglänge ein. Mehrfachstreuung sowie Wechselwirkungen mit Luft werden hier nicht berücksichtigt. In vielen Modellen wird die Streustrahlung vereinfachend durch inkohärente Streuung an freien Elektronen simuliert. Beim vorliegenden Verfahren werden dagegen physikalisch korrekt auch die Bindungsenergie der Elektronen und die kohärente Streuung berücksichtigt. Die Korrektur erfolgt durch Differenzbildung der Streuprojektion mit der gemessenen Projektion vor der (zweiten bzw. nächsten) Rekonstruktion. Wegen der Objektabhängigkeit können nicht mehr alle Projektionen mit einer einzigen Korrekturfunktion behandelt werden, sondern jede Projektion bedarf einer eigenen Streustrahlkorrektur. Dank der Absenz höherer Frequenzen im Streusignal kann allerdings das gesamte Streusinogramm durch eine kleinere Menge von Projektionen bestimmt werden. Während für klassische Cone-Beam CT Tausende von Projektionswinkeln gerechnet werden, wird im vorliegenden Fall eine ausreichende Präzision des Streusignals schon mit beispielsweise 32 Projektionen erreicht.

Die Fig. 1 veranschaulicht die geometrischen Verhältnisse bei der Einfachstreuung. Dabei sei S die Quelle, A ein Voxel des Objektes und P ein Punkt auf der Detektorfläche. Ein Photon wird von der Quelle S emittiert und im Punkt A des Objekts gestreut. Nur die Photonen, die den Detektor in P erreichen, tragen zur Streuintensität bei. Ein weiteres Streuereignis findet nicht statt. Die Streugleichung (9) beschreibt die Anzahl der Photonen, die von allen Streuzentren innerhalb des Integrationsgebiets einen gegebenen Zielpunkt auf der Detektorfläche treffen. Dabei wird vereinfachend angenommen, dass ein Photon nur einmal gestreut wird. Damit berechnet sich die Streustrahlintensität in Pixel mit Indizes ($l,m$) für Einfachstreuung zu:

$$I_{sc}(l,m) = I_{Ra}(l,m) + I_{Co}(l,m)$$
$$= \iint_{v \in V, E} \varepsilon_{det}(E,\theta,Z_{det}) d^2 N_{Ra,V \to P}(E) dE dv + \iint_{v \in V, E} \varepsilon_{det}(E,\theta,Z_{det}) d^2 N_{Co,V \to P}(E) dE dv$$

$$(9)$$

$\varepsilon_{det}(E,\theta,Z_{det})$ ist eine Funktion, die die Energieverteilung innerhalb des Detektors modelliert, und $d^2 N_{Ra,V \to P}$ und $d^2 N_{Co,V \to P}$ bezeichnen die Anzahl vom Voxelelement v in $P(l,m)$ gestreuter Rayleigh- und Compton-Photonen.

Eine einfache Abschätzung der Detektorintensität ergibt sich aus:

$$\varepsilon_{det}(E,\theta,Z_{det}) = E.\left(1 - e^{-\mu_{det}(E,Z)y_{det}(\theta)}\right)$$

oder durch tabellierte Monte-Carlo simulierte Daten, wobei alle Charakteristiken des Detektors berücksichtigt werden.

Nachfolgend wird der Inhalt von $d^2 N_{Ra,V \to P}$ erläutert (der Ablauf ist für die inkohärente Streuung sehr ähnlich). Die Anzahl der Rayleigh-gestreuten Photonen, die den Detektor P innerhalb des infinitesimalen Raumwinkels $d\Omega_P$ treffen, ist das Produkt von $dN_v$ (die gesamte Anzahl der von der Quelle emittierte Photonen, die im Voxel v kollidieren), durch die Wahrscheinlichkeit $dp$, dass ein Photon in den Raumwinkel $d\Omega_P$ gestreut wird. Beide sind energieabhängig, und es folgt

$$d^2 N_{Ra,V \to P}(E) = dN_v(E).dp(E)$$

Um die gesamte Anzahl der von der Quelle emittierten Photonen, die im Voxel v kollidieren, zu bestimmen, muss der Raumwinkel und die Abschwächung zwischen S und v berücksichtigt werden. So kann der Term $dN_v$ noch folgendermassen detailliert werden:

$$dN_V(E) = dN_S(E) \exp\left(-\sum_{S \to V} \mu_l(E) dl\right)$$
$$= \frac{dN_S(E)}{d\Omega} \exp\left(-\sum_{S \to V} \mu_l(E) dl\right) \frac{d\Omega}{dS} dS = \frac{dN_S(E)}{d\Omega} \exp\left(-\sum_{S \to V} \mu_l(E) dl\right) \frac{dS}{SA^2}$$

wobei $dN_s(E)$ die gesamte Anzahl der von der Quelle emittierten Photonen ist, die im Voxel v kollidieren. Die Berechnung der Wahrscheinlichkeit $dp$ involviert die differentiellen Wirkungsquerschnitte und die Anzahl der Atome im Voxel pro Flächeneinheit sowie die Abschwächung zwischen S und v. Die Wahrscheinlichkeit $dp$ schreibt sich also:

$$dp(E) = \frac{dN_{atom}}{dS} d\sigma_{atom} = \frac{dN_{atom}}{dS} \frac{d\sigma_{Ra}}{d\Omega}(E) \exp\left(-\sum_{V \to P} \mu_l(E) dl\right) d\Omega$$

wobei $dN_{atom}$ die Anzahl Atome im Voxel und im Raumwinkel $d\Omega_P$ gesehen vom Voxel v in der Richtung von Pixel P ist:

$$dΩ_P = \frac{dS_{det}}{VP^2} \cos(VP, n_{det})$$

$dS_{det}$ entspricht der Pixelfläche und $n_{det}$ ist der orthogonale Vektor der Detektorfläche. Damit ist die Anzahl der Rayleigh-gestreuten Photonen, die P erreichen:

$$d^2N_{Ra,V\to P}(E) = \frac{dN_S(E)}{dΩ}.exp\left(-\sum_{S\to V}\mu_l(E)dl\right).\frac{dS}{SA^2}.\frac{dN_{atom}}{dS}\frac{dσ_{Ra}}{dΩ}(E).exp\left(-\sum_{V\to P}\mu_l(E)dl\right)dΩ_P$$

$$= \frac{dN_{atom}(V)}{SA^2}\frac{dN_S(E)}{dΩ}.exp\left(-\sum_{S\to V}\mu_l(E)dl\right).\frac{dσ_{Ra}}{dΩ}(E).exp\left(-\sum_{V\to P}\mu_l(E)dl\right)dΩ_P$$

Dieselbe Prozedur gilt für die Compton-gestreuten Photonen (nur die Energie wird mit $E_{Co}$ ersetzt):

$$d^2N_{Co,V\to P}(E) = \frac{dN_{atom}(V)}{SA^2}\frac{dN_S(E)}{dΩ}.exp\left(-\sum_{S\to V}\mu_l(E)dl\right).\frac{dσ_{Co}}{dΩ}(E).exp\left(-\sum_{V\to P}\mu_l(E_{Co})dl\right)dΩ_P$$

Das endgültige Bild der Einfachstreuintensität auf dem CT-Detektor lässt sich durch folgenden Pseudo-Code mit einfacher verkapselter Berechnung lösen:

```
"for" jede Ansicht (Projektion) "do"
        "for" jedes aktives Voxel (Luftvoxel werden nicht beachtet) "do"
                Berechne die Distanz SV, SV²
                "for" jede Energie E "do"
                        Berechne den Attenuationsfaktor für eintreffende Photonen,
                        und Distanz SV, SV²
                        Berechne die Anzahl eintreffender Photonen pro
                        Einheitsfläche, die in V eintreten
                        "for" jedes Pixel P des Detektors (entweder FD oder
                        IAG-Detektoren) "do"
                                Berechne cos θ, cos² θ, und sin θ/2, und Raumwinkel
                                Berechne den Attenuationsfaktor bis zum Pixel P
                                Berechne E_Co, x, f(x,Z), S(x,Z) E_Ra dσ_KN(θ,E)/dΩ,
                                Berechne dσ_FF(θ,E)/dΩ, dσ_Co(θ,E)/dΩ
                                Berechne d²N_Co,V→P(E), d²N_Ra,V→P(E), dE_dep(E,θ)
                        "end for"
                "end for"
        "end for"
"end for"
```

*3.2 Optimierte Streusignalberechnung I: Wichtungsmethode*

Zur Beschleunigung der oben beschriebenen Methode wurde in Analogie der für Monte-Carlo-Technik entwickelten forcierten Detektion eine Wichtung eingeführt. Dabei wird einem jeden Voxel $V_{ijk}$ ein Satz von unabhängig zufällig ausgewählten Pixeln $\{P_{mn}\}$ der Detektorfläche D zugeordnet. Dieser ausgewählte Pixelsatz stellt nur einen Bruchteil aller Pixel der Detektorfläche dar. Danach wird eine deterministische Simulation der Einfachstreuung über sämtliche Voxel durchgeführt, wobei aber für jedes Voxel nur die jeweils zugeordneten Pixel berücksichtigt werden. Als Preis für die damit erzielte Beschleunigung entsteht ein rauschbehaftetes Simulationsergebnis. Aus diesem Grund wird vorteilhafterweise eine Filterung vorgenommen, wofür an sich bekannte Verfahren verfügbar sind.

*3.3 Optimierte Streusignalberechnung II: Interpoliertes Adaptives Raster*

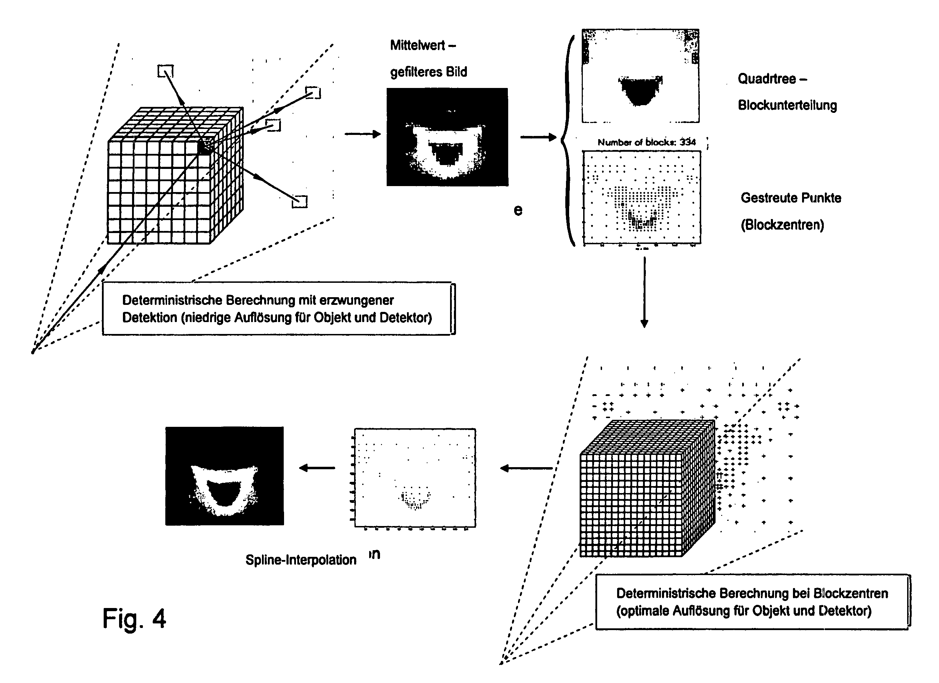

Als weitere Verbesserung der Streusignalberechnung wird eine Methode des interpolierten adaptiven Rasters, auf Englisch "Interpolated Adaptive Grid" (IAG) vorgeschlagen. Dabei handelt es sich um ein beschleunigtes Verfahren, bei dem die Streuintensität auf dem Detektor numerisch in drei Stufen berechnet wird. Im ersten Schritt werden die Streuintegrale sehr schnell mit einer groben Ortsauflösung der Detektorelemente unter Anwendung der oben beschriebenen Wichtungsmethode berechnet. Im zweiten Schritt wird vom Bild aus ein neues Raster berechnet, das die Orte mit grösseren Gradienten besser diskretisiert. Damit ist das adaptive Raster meistens durch einen nicht konstanten Abstand charakterisiert und gewährleistet, dass die meisten Knotenpunkte sich in Zonen mit starker Variation des Streusignals befinden (Fig. 4). Vorteilhafterweise wird hierfür die an sich bekannte "Quadtree-Kodierung" verwendet. Im dritten Schritt werden die Integrale wieder auf den Knotenpunkten (bzw. Detektorelementen) mit der definitiven Ortauflösung exakt berechnet.

*3.4 Die stochastische Methode für die Streuung höherer Ordnung*

Aus Untersuchungen der Energieablagerung für die verschiedenen Streuordnungen wurde gefunden, dass nach der ersten Ordnung die Signale meistens wie eine verschmierte Skalierung (Faltung) der Einfachstreuung aussehen. Für grössere Abstände zwischen dem Objekt und dem Detektor nähert sich das Signal einer Konstante an und kann als ein "Offset" betrachten werden. Jedoch bleibt der Streubeitrag manchmal objektabhängig und kann deshalb nicht einfach vernachlässigt werden.

Es wurde in mehreren Publikationen berichtet [Fre-03] [End-01], dass das Signal der Mehrfachstreuung von folgenden Parametern abhängt:

- (durchschnittliche) Weglänge
- Material (Z) des durchleuchteten Objekts
- Energiespektrum der Röhre (Röntgenquelle)
- Abstand zum Detektor

Darauf basierend wird nun ein virtuelles Objekt konstruiert, welches bezüglich der Mehrfachstreuung möglichst ähnliche Eigenschaften wie das untersuchte Originalobjekt hat. Dieses virtuelle Objekt, das nachfolgend als Equivalent Path-Length Object (EPLO) oder "Ersatzform" bezeichnet wird, hat durch eine Histogrammanalyse der Primärintensität dieselbe Weglänge wie das Originalobjekt.

Es ergeben sich die folgenden Bedingungen für die Erstellung des EPLO:

$K_1$. das EPLO und das Originalobjekt haben ein identisches Weglängenhistogramm;

$K_2$. das EPLO und das Originalobjekt haben dasselbe Volumen;

$K_3$. das EPLO und das Originalobjekt haben dasselbe Zentrum.

Die Energiespektren, der Abstand Quelle-Detektor, die Materialzusammensetzung des Objekts und die Detektorgrösse werden natürlich beibehalten. Nachfolgend wir das Volumen des Objekts als $V_0$ bezeichnet und seine Zentrumskoordinaten in Referenzsystem $(O,\overline{i,j,k})$ werden als $(x_0, y_0, z_0)$ angesetzt.

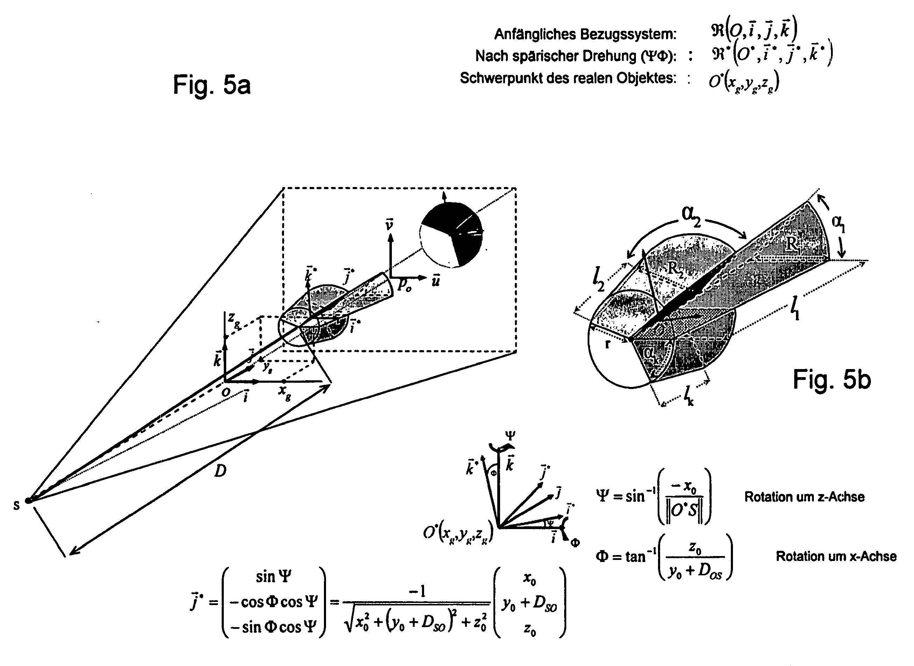

Es wird vorausgesetzt, dass das EPLO aus K nicht überlappenden Elementen aufgebaut ist (Fig. 5). Diese K Elemente sind eine Anzahl von koaxial um eine gemeinsame Längsachse (A) angeordneten, nicht-überlappenden Kegelstumpf sektoren ($K_i$), wobei die gemeinsame Längsachse (A) von der Punktquelle (P) zum Zentrum (Z) verläuft. Die Kegelstumpfsektoren sind so angeordnet, dass ihre Deckflächen der Punktquelle (P) zugewandt und koplanar sind und zusammen eine kreisförmige Fläche bilden.

Jedes einzelne Element hat eine Volumen $\upsilon_k$, eine Länge $L_k$, einen gemeinsamen Eingangsradius $r,$ einen

variierenden Ausgangsradius $R_k$ und einen Winkel $\alpha_k$. Die Quelle S bildet die Spitze des kegelstumpfartigen Konus (Fig. 5) und hat einen Abstand D vom Eingangsradius. Der sphärische Winkel zum zentralen Strahl ist $(\Phi, \Psi)$. Es folgt die Beziehung zwischen $R_k$ und $r$:

$$\frac{R_k}{D+L_k} = \frac{r}{D} \tag{10}$$

Das Verhältnis zwischen den beiden Koordinatensystemen wird durch das Produkt der entsprechenden Rotationsmatrizen und einen Verschiebungsvektor T gegeben:

$$\begin{pmatrix} x^\bullet \\ y^\bullet \\ z^\bullet \end{pmatrix} = \Re_x(\Phi)\Re_z(\Psi)\begin{pmatrix} x \\ y \\ z \end{pmatrix} + T = \begin{pmatrix} \cos\Psi & -\sin\Psi & 0 \\ \sin\Psi\cos\Phi & \cos\Psi\cos\Phi & -\sin\Phi \\ \sin\Psi\sin\Phi & \cos\Psi\sin\Phi & \cos\Phi \end{pmatrix}\begin{pmatrix} x \\ y \\ z \end{pmatrix} + \begin{pmatrix} t_x \\ t_y \\ t_z \end{pmatrix} \tag{11}$$

Vom Histogramm der Weglänge wird ein kmeans-Clustering [Seb-84] eingesetzt, um die K beste Werte zu identifizieren. (Unter "Clustering-Analyse" versteht man die Aufteilung der Eingabemuster nach bestimmten Merkmalen in Gruppen, den Clustern, die - räumlich gesehen - je nach Ähnlichkeit mehr oder weniger weit auseinander liegen.

Sobald der Nutzer sich für K Clusters entschieden hat, wird der kmeans-Algorithmus die K besten Weglängen bestimmen, die das Histogramm h am besten repräsentieren. Die euklidische Norm wird als Distanznorm für den Cluster genommen. Das kmeans-Clustering ergibt einen Kx1 Vektor der Weglänge L sowie die relativen Gewichte W:

$$(\mathbf{K_1}) \quad [L,W] = kmean(h(l),K) \qquad (\text{mit } \forall k \in [1\ldots K], \quad \alpha_k = 2\pi W_k) \tag{12}$$

Das Gewicht entspricht der Anzahl der geordneten Weglängen im Cluster, normiert mit dem gesamten Gewicht. Die Erhaltung des gesamten Volumens schreibt sich:

$$(\mathbf{K_2}): \quad \sum_{k=1}^{k} \upsilon_k = \sum_{k=1}^{k} \frac{\pi}{3} \omega_k L_k \left( R_k^2 + r^2 + rR_k \right) = V_0 \tag{13}$$

Die beiden Schwerpunkte müssen im Raum dieselben Koordinaten haben:

$$(\mathbf{K_3}): \quad \begin{bmatrix} x_o \\ y_o \\ z_o \end{bmatrix} = \sum_{k=1..K} \upsilon_k \begin{bmatrix} X_k \\ Y_k \\ Z_k \end{bmatrix} \tag{14}$$

Für einen Konus, der im Referenzsystem $(O^*, \bar{i}^*, \bar{j}^*, \bar{k}^*)$ platziert wäre, haben wir die folgenden Koordinaten mit

$$\begin{bmatrix} X_k \\ Y_k \\ Z_k \end{bmatrix} = \begin{bmatrix} \rho_k \cos\left(\dfrac{\varphi_k + \varphi_{k+1}}{2}\right) \\ \dfrac{L_k \cdot (R_k^2 + 2rR_k + 3R_k^2)}{4 \cdot (R_k^2 + rR_k + r^2)} \\ \rho_k \sin\left(\dfrac{\varphi_k + \varphi_{k+1}}{2}\right) \end{bmatrix} \cdot \quad und \; \rho_k = \frac{\sin\left(\dfrac{\alpha_k}{2}\right)}{\alpha_k} \frac{(R_k^3 + r^2 R_k + rR_k^2 + r^3)}{(R_k^2 + rR_k + r^2)} \quad (15)$$

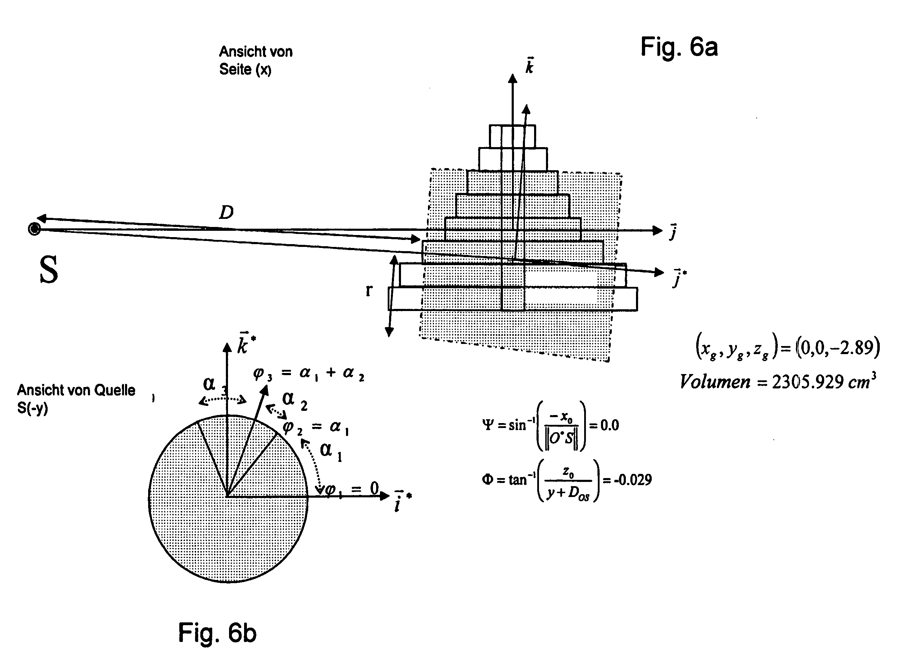

Die Liste $\{\varphi_k\}_{k=1..K}$ bestimmt die Winkelüberdeckung der K-Elemente. So besetzt das Element k das Kreissegment$[\varphi_k,\varphi_{k+1}]$, mit einem Winkel $\alpha_k = \varphi_{k+1} - \varphi_k$ (Fig. 6).

Um die Parameter des EPLO zu bestimmen, d.h. $(D, r, \Psi, \Phi, \{R_k\}_{k=1q..K})$, wird die euklidische Norm $n_b$ zwischen den beiden Schwerpunkten minimiert:

$$n_b\left(D, r, \Psi, \Phi, \{R_k\}_{k=1q..K}\right) = \left(\bar{x}\left(D, r, \Psi, \Phi, \{R_k\}_{k=1q..K}\right) - \bar{X}\right)^2 + \left(\bar{z}\left(D, r, \Psi, \Phi, \{R_k\}_{k=1q..K}\right) - \bar{Z}\right)^2$$

$$(16)$$

Hierfür wird ein Optimierungsalgorithmus für bedingungslose nichtlineare Probleme verwendet.

Das EPLO wird mit seinen Eigenschaften mit einem Monte-Carlo Algorithmus simuliert. Die Energieablagerung $\varepsilon_m$ der Mehrfachstreuung auf dem gesamten Detektor wird für eine Abschätzung der Mehrfachstreuung des Objekts angenommen. Ausserdem wird ein zweidimensionaler Faltungskern $\kappa_0$ identifiziert, mit

$$\varepsilon_{m,EPLO}(x, y) = \varepsilon_{sc,1,EPLO}(x, y) \otimes \kappa_0(x, y) \quad (17)$$

$\varepsilon_{sc,1}(x, y)$ steht für die Energieablagerung der Einfachstreuung. Die Quantifizierung des Signals und der Faltungskern $\kappa_0$ dienen dazu, die winkelabhängige Mehrfachstreuung zu berechnen, wie in (18) dargestellt:

$$\varepsilon_m(x, y) = \frac{\left\|\varepsilon_{m,EPLO}\right\|}{\left\|\varepsilon_{sc,1}(x, y) * \kappa_0(x, y)\right\|}\left[\varepsilon_{sc,1}(x, y) * \kappa_0(x, y)\right] \quad (18)$$

4. Referenzen

[Col-04] A.P. Colijn and F.J. Beekman "Accelerated Simulation of Cone Beam X-Ray Scatter Projections", IEEE Transactions on Medical Imaging, vol 23, no 5, Mai 2004.

[Det-04] DETECT: New Product Design and Engineering Technologies Based on Next Generation Computed Tomography. EU Projekt n° 203885, Startdatum: 01.01.2004.

[End-01] M. Endo, T. Tsunoo, N. Nakamori and K. Yoshida "Effect of scattered radiation on image noise in cone-beam CT", Med. Phys. 28, pp 469-474, 2001.

[Fre-03] N. Freud. Modélisation et simulation de systemes d'imagerie par rayons X ou gamma. PhD Thesis : Institut National des Sciences Appliquées de Lyon, 2003.

[Kyr-06] Y. Kyriakou, Thomas Riedel and Willi A Kalender "Combining deterministic and Monte-Carlo calculations for fast estimation of scatter intensities", Phys. Med. Biol. 51 (2006), 4567-4586.

[Seb-84] G.A.F. Seber "Multivariate Observations", John Wiley & Sons Inc, 1984.

**Patentansprüche**

1. Verfahren zur Streukorrektur von röntgentomografischen Daten, umfassend die folgenden Schritte:

   a) Rekonstruktion eines anfänglichen 3D-Abbildes eines Objektes aus einem Satz von röntgentomografisch gemessenen Projektionsdaten ($I_{mes}$);
   b) Berechnung eines Satzes von simulierten Projektionsdaten ($I_{sim}$) aufgrund des anfänglichen 3D-Abbildes oder eines Modells desselben, wobei die simulierten Projektionsdaten die Summe eines Transmissionsbeitrags ($I_{sim}^d$) und eines Streubeitrags ($I_{sim}^s$) sind;
   c) Berechnung eines Satzes von korrigierten Projektionsdaten ($I_{kor}$) durch Subtraktion der simulierten Projektionsdaten von den gemessenen Projektionsdaten;
   d) Rekonstruktion eines korrigierten 3D-Abbildes aus dem Satz von korrigierten Projektionsdaten; und
   e) falls ein zuvor definiertes Wiederholungskriterium erfüllt ist: Wiederholung der Schritte b) bis d), wobei für Schritt b) das zuletzt gewonnene korrigierte 3D-Abbild anstelle des anfänglichen 3D-Abbildes oder Modells desselben verwendet wird;

   wobei

   - der Transmissionsbeitrag durch eine deterministische Simulation der Photonentransmission von einer Punktquelle (P) durch eine erste voxelisierte Darstellung $\{V_{ijk}^{(1)}\}$ des jeweiligen 3D-Abbildes oder Modells desselben hindurch auf eine Detektorfläche D berechnet wird;
   - der Streubeitrag einen Einfach-Streubeitrag umfasst, der durch zumindest eine deterministische Simulation der Einfachstreuung von der Punktquelle (P) an einer zweiten voxelisierten Darstellung $\{V_{ijk}^{(2)}\}$ des jeweiligen 3D-Abbildes oder Modells desselben auf die Detektorfläche D berechnet wird; und
   - wobei die Anzahl von Voxel $N_2$ der zweiten voxelisierten Darstellung geringer ist als die Anzahl von Voxel $N_1$ der ersten voxelisierten Darstellung,

   und wobei die Berechnung des Einfach-Streubeitrags umfasst:

   - einem jeden Voxel $V_{ijk}^{(2)}$ der zweiten voxelisierten Darstellung $\{V_{ijk}^{(2)}\}$ wird ein Satz von unabhängig zufällig ausgewählten Pixeln $\{P_{mn}\}$ der Detektorfläche D zugeordnet;
   - es wird zumindest eine erste deterministische Simulation der Einfachstreuung über sämtliche Voxel durchgeführt, wobei für jedes Voxel nur die jeweils zugeordneten Pixel berücksichtigt werden;
   - anschliessend wird gegebenenfalls eine Filterung des so gewonnenen Simulationsergebnisses vorgenommen; und
   - das - gegebenenfalls gefilterte - Simulationsergebnis wird als Einfach-Streubeitrag übernommen.

2. Verfahren nach Anspruch 1, weiterhin umfassend die folgenden Schritte:

   - nach der ersten deterministischen Simulation der Einfachstreuung wird am gegebenenfalls gefilterten Simulationsergebnis eine adaptive Rasterung vorgenommen, wodurch die Detektorfläche D in eine Vielzahl von Rasterelemente $\{D_{mn}\}$ eingeteilt wird, wodurch Detektorzonen mit vergleichsweise grösseren lokalen Variationen der Einfachstreuung mit einer vergleichsweise feineren Rasterung belegt werden und umgekehrt;
   - es wird eine zweite deterministische Simulation der Einfachstreuung über sämtliche Voxel durchgeführt, wobei für jedes Voxel sämtliche Rasterelemente berücksichtigt werden;
   - anschliessend wird gegebenenfalls eine Interpolation des so gewonnenen zweiten Simulationsergebnisses zurück auf ein gleichverteiltes Pixelmuster vorgenommen; und
   - das - gegebenenfalls interpolierte und gegebenenfalls filtrierte - Simulationsergebnis wird als Einfach-Streubeitrag übemommen.

3. Verfahren nach Anspruch 2, wobei die adaptive Rasterung durch Quadtree-Kodierung vorgenommen wird.

4. Verfahren nach einem der Ansprüche 1 bis 3, wobei der Streubeitrag zusätzlich einen Mehrfach-Streubeitrag umfasst, welcher durch Monte-Carlo-Simulation der Mehrfachstreuung an einer Ersatzform des jeweiligen 3D-Abbildes oder Modells desselben berechnet wird, wobei gilt:

   a) die Ersatzform und das 3D-Abbild bzw. das Modell desselben haben identische Weglängenhistogramme;
   b) die Ersatzform und das 3D-Abbild bzw. das Modell desselben haben identische Volumina;

c) die Ersatzform und das 3D-Abbild bzw. das Modell desselben haben denselben Schwerpunkt (Z).

5. Verfahren nach Anspruch 4, wobei die besagte Ersatzform durch eine Anzahl von koaxial um eine gemeinsame Längsachse (A) angeordneten, nicht-überlappenden Kegelstumpfsektoren ($K_i$) gebildet wird, wobei die gemeinsame Längsachse (A) von der Punktquelle (P) zum Zentrum (Z) verläuft, wobei die Kegelstumpfsektoren so angeordnet sind, dass ihre Deckflächen der Punktquelle (P) zugewandt und koplanar sind und zusammen eine kreisförmige Fläche bilden.

6. Datenverarbeitungssystem zur Streukorrektur von röntgentomografischen Daten, wobei das Datenverarbeitungssystem Mittel zur Durchführung des Verfahrens nach einem der Ansprüche 1 bis 5 aufweist.

7. Computerprogramm zur Streukorrektur von röntgentomografischen Daten, das auf einer Datenverarbeitungseinrichtung ladbar und ausführbar ist, und das bei der Ausführung das Verfahren nach einem der Ansprüche 1 bis 5 ausführt.

8. Datenträger, enthaltend ein Computerprogramm gemäss Anspruch 7.

**Claims**

1. A method for scattering correction of x-ray tomography data, comprising the following steps:

   a) reconstructing an initial 3D image of an object from a set of projection data ($I_{mes}$) measured by x-ray tomography;
   b) calculating a set of simulated projection data ($I_{sim}$) on the basis of the initial 3D image or of a model thereof, wherein the simulated projection data correspond to the sum of a transmission contribution ($I_{sim}^d$) and of a scattering contribution ($I_{sim}^s$);
   c) calculating a set of corrected projection data ($I_{kor}$) by subtracting the simulated projection data from the measured projection data;
   d) reconstructing a corrected 3D image from the set of corrected projection data; and
   e) if a predefined repetition criterion is satisfied: repeating steps b) to d), wherein for step b) the finally obtained corrected 3D image is used instead of the initial 3D image or model thereof;

   wherein

   - the transmission contribution is calculated by means of a deterministic simulation of the photon transmission from a point source (P) through a first voxelized representation $\{V_{ijk}^{(1)}\}$ of the instant 3D image or model thereof onto a detector surface D;
   - the scattering contribution comprises a single scattering contribution that is calculated by means of at least one deterministic simulation of the single scattering from a point source (P) at a second voxelized representation $\{V_{ijk}^{(2)}\}$ of the instant 3D image or model thereof onto a detector surface D; and
   - wherein the number of voxels $N_2$ of the second voxelized representation is less than the number of voxels $N_1$ of the first voxelized representation,

   and wherein the calculation of the single scattering contribution comprises:

   - associating, to each voxel $V_{ijk}^{(2)}$ of the second voxelized representation $\{V_{ijk}^{(2)}\}$, a set of independent randomly selected pixels $\{P_{mn}\}$ of the detector surface D;
   - carrying out at least a first deterministic simulation of the single scattering over all voxels, wherein for each voxel only the instantly associated pixels are considered;
   - subsequently optionally carrying out a filtering of the simulation result thus obtained; and
   - taking over as single scattering contribution the - optionally filtered - simulation result.

2. The method according to claim 1, further comprising the following steps:

   - after the first deterministic simulation of the single scattering, subjecting the optionally filtered simulation result to an adaptive rasterization, whereby the detector surface D is divided into a plurality of raster elements $\{D_{mn}\}$, whereby detector zones with comparatively greater local variations of the single scattering are covered with a comparatively finer rasterization and vice versa;
- carrying out a second deterministic simulation of the single scattering over all voxels, wherein for each voxel all raster elements are considered;
- subsequently optionally carrying out an interpolation of the second simulation result thus obtained back onto a uniformly distributed pixel pattern; and
- adopting as single scattering contribution the - optionally interpolated and optionally filtered - simulation result.

3. The method according to claim 2, wherein the adaptive rasterization is carried out by means of quadtree encoding.

4. The method according to any one of claims 1 to 3, wherein the scattering contribution further comprises a multiple scattering contribution which is calculated by means of Monte Carlo simulation of multiple scattering on a substitute shape of the instant 3D image or model thereof, with the provision that:

a) the substitute shape and the 3D image or model thereof have identical path length histograms;
b) the substitute shape and the 3D image or model thereof have identical volumes;
c) the substitute shape and the 3D image or model thereof have the same center of mass (Z).

5. The method according to claim 4, wherein said substitute shape is formed by a plurality of non-overlapping truncated cone sectors ($K_i$) that are coaxially arranged around a common longitudinal axis (A), wherein the common longitudinal axis (A) extends from the point source (P) to the center (Z), wherein the truncated cone sectors are arranged in such manner that their top surfaces face the point source (P) and are coplanar and together form a circular area.

6. A data processing system for scattering correction of x-ray tomography data, wherein the data processing system comprises means for performing the method according to any one of claims 1 to 5.

7. A computer program for scattering correction of x-ray tomography data which can be loaded onto and executed on a data processing device and which upon execution thereof carries out the method according to any one of claims 1 to 5.

8. A data carrier comprising a computer program according to claim 7.

**Revendications**

1. Procédé pour corriger la diffusion de données de tomographie à rayons X, comprenant les étapes suivantes :

a) reconstruction d'une reproduction 3D initiale d'un objet à partir d'un jeu de données de projection ($I_{mes}$) mesurées par tomographie à rayons X ;
b) calcul d'un jeu de données de projection simulées ($I_{sim}$) sur la base de la reproduction 3D initiale ou d'un modèle de celle-ci, sachant que les données de projection simulées sont la somme d'une part de transmission ($I_{sim}^d$) et d'une part de diffusion ($I_{sim}^s$) ;
c) calcul d'un jeu de données de projection corrigées ($I_{kor}$) en soustrayant les données de projection simulées des données de projection mesurées ;
d) reconstruction d'une reproduction 3D corrigée à partir du jeu de données de projection corrigées ; et
e) si un critère de répétition préalablement défini est rempli : répétition des étapes b) à d) en utilisant pour l'étape b), au lieu de la reproduction 3D initiale ou du modèle de celle-ci, la dernière reproduction 3D corrigée obtenue ;

sachant

- que la part de transmission est calculée par une simulation déterministe de la transmission de photons, à partir d'une source ponctuelle (P) sur une surface de détecteur D, à travers une première représentation voxelisée $\{V_{ijk}^{(1)}\}$ de la reproduction 3D respective ou du modèle de celle-ci ;
- que la part de diffusion comprend une part de diffusion simple qui est calculée par au moins une simulation déterministe de la diffusion simple à partir d'une source ponctuelle (P) sur la surface de détecteur D, sur une deuxième représentation voxelisée $\{V_{ijk}^{(2)}\}$ de la reproduction 3D respective ou du modèle de celle-ci ;
- et sachant que le nombre de voxels $N_2$ de la deuxième représentation voxelisée est inférieur au nombre de voxels $N_1$ de la première représentation voxelisée,

et sachant que le calcul de la part de diffusion simple comprend les opérations suivantes :

- on associe à chaque voxel $V_{ijk}^{(2)}$ de la deuxième représentation voxelisée $\{V_{ijk}^{(2)}\}$ un jeu de pixels $\{P_{mn}\}$, sélectionnés indépendamment et aléatoirement, de la surface de détecteur D ;
- on effectue au moins une première simulation déterministe de la diffusion simple sur tous les voxels, sachant qu'on ne prend en compte pour chaque voxel que les pixels respectivement associés,
- on effectue ensuite éventuellement un filtrage du résultat de simulation ainsi obtenu ; et
- le résultat de simulation - éventuellement filtré - est pris comme part de diffusion simple.

2. Procédé selon la revendication 1, comprenant en outre les étapes suivantes :

- à la suite de la première simulation déterministe de la diffusion simple, on entreprend sur le résultat de simulation éventuellement filtré un tramage adaptatif, de sorte que la surface de détecteur D est divisée en une pluralité d'éléments de trame $\{D_{mn}\}$, de sorte que des zones de détecteur avec des variations locales relativement plus importantes de la diffusion simple sont occupées par un tramage relativement plus fin, et vice versa ;
- on effectue une deuxième simulation déterministe de la diffusion simple sur tous les voxels, sachant que pour chaque voxel, on prend en compte tous les éléments de trame ;
- ensuite, on entreprend éventuellement une interpolation en retour du deuxième résultat de simulation ainsi obtenu sur un modèle de pixels de répartition uniforme ; et
- le résultat de simulation - éventuellement interpolé et éventuellement filtré - est pris comme part de diffusion simple.

3. Procédé selon la revendication 2, dans lequel le tramage adaptatif est effectué par un codage quaternaire.

4. Procédé selon l'une des revendications 1 à 3, dans lequel la part de diffusion comprend en outre une part de diffusion multiple qui est calculée par simulation de Monte-Carlo de la diffusion multiple sur une forme équivalente de la reproduction 3D respective ou du modèle de celle-ci, sachant que :

a) la forme équivalente et la reproduction 3D ou le modèle de celle-ci ont des histogrammes de longueur de parcours identiques ;
b) la forme équivalente et la reproduction 3D ou le modèle de celle-ci ont des volumes identiques ;
c) la forme équivalente et la reproduction 3D ou le modèle de celle-ci ont le même barycentre (Z).

5. Procédé selon la revendication 4, dans lequel ladite forme équivalente est formée par un certain nombre de secteurs tronconiques $(K_i)$ disposés coaxialement autour d'un axe longitudinal commun (A) sans se chevaucher, sachant que l'axe longitudinal commun (A) s'étend de la source ponctuelle (P) au centre (Z), et sachant que les secteurs tronconiques sont disposés de telle sorte que leurs surfaces de recouvrement sont tournées vers la source ponctuelle (P) et sont coplanaires et forment conjointement une surface circulaire.

6. Système de traitement de données pour corriger la diffusion de données de tomographie à rayons X, dans lequel le système de traitement de données comprend des moyens pour la mise en oeuvre du procédé selon l'une des revendications 1 à 5.

7. Programme informatique pour corriger la diffusion de données de tomographie à rayons X, qui peut être chargé et exécuté sur un équipement de traitement de données et qui, lors de son exécution, exécute le procédé selon l'une des revendications 1 à 5.

8. Support de données contenant un programme informatique selon la revendication 7.

Fig. 1c

Fig. 1b

Fig. 1a

Fig. 2

**Sinogramm
Erfassung**

$I_{mes}$

**3D Bild-
Rekonstruktion**

$$I_{mes}^{corr} = I_{mes} - \left( \kappa \cdot I_{sc} - \eta \right)$$

**Material-Identifikation (a-priori-Information)
& Segmentation**

**Resampling mit
hoher Auflösung
(Ima : $n_d$, Det : $m_d$)**

**Monte-Carlo-
Simulation**

**Resampling mit
niedriger Auflösung
(Ima : $n_{sc}$, Det : $m_{sc}$)**

**Deterministische
Simulation der
direkten Photonen**

$I_{sc,1}^{MC}, I_{sc,\Sigma_{n \geq 2}}^{MC}$

**Deterministische
Simulation der
Streuung 1. Ordng.**

**Filterung &
Dekonvolution**

$$I_{sc,\Sigma_{n \geq 2}}^{MC} = I_{sc,1}^{MC} \otimes K$$

**Filterung /
Interpolation**

**Resampling**

**Kmeans
clustering**

$I_d^{det}$

**Berechnung der
Streuung n-ter Ordng.**

$I_{sc,1}^{det}$

**Resampling**

**EPLO**

$$I_{sc,\Sigma_{n \geq 2}} = \left\| I_{sc,\Sigma_{n \geq 2}}^{MC} \right\| \cdot \left( I_{sc,1}^{det} \otimes K \right) / \left\| I_{sc,1}^{det} \otimes K \right\|$$

$$I_{sc} = I_{sc,1} + I_{sc,n}$$

$$I_{tot} = I_d^{det} + I_{sc}$$

**Normierungskoeffizient**

**Konstante für
mittleres
Hintergrundrauschen**

**Least Square
Schätzung von $(\kappa, \eta)$ :**

$$I_{mes} = \kappa \cdot I_{tot} + \eta$$

# Fig. 3

Fig. 4

Mittelwert – gefilteres Bild

Quadrtree – Blockunterteilung

Number of blocks: 334

Gestreute Punkte (Blockzentren)

Deterministrische Berechnung mit erzwungener Detektion (niedrige Auflösung für Objekt und Detektor)

Spline-Interpolation

Deterministrische Berechnung bei Blockzentren (optimale Auflösung für Objekt und Detektor)

EP 2 009 592 B1

Fig. 5a

Fig. 5b

21

Fig. 6a

Ansicht von
Seite (x)

$\vec{k}$

$D$

S

r

$\vec{j}$

$\vec{j}^*$

$(x_g, y_g, z_g) = (0,0,-2.89)$

$Volumen = 2305.929\ cm^3$

$\Psi = \sin^{-1}\left(\dfrac{-x_0}{\left\|\overrightarrow{O^*S}\right\|}\right) = 0.0$

$\Phi = \tan^{-1}\left(\dfrac{z_0}{y + D_{os}}\right) = -0.029$

Ansicht von Quelle
S(-y)

$\vec{k}^*$

$\alpha_3$

$\varphi_3 = \alpha_1 + \alpha_2$

$\alpha_2$

$\varphi_2 = \alpha_1$

$\alpha_1$

$\varphi_1 = 0$

$\vec{i}^*$

Fig. 6b

EP 2 009 592 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6163589 A
- US 20050185753 A1

**In der Beschreibung aufgeführte Nicht-Patentliteratur**

- Fast implementation of the single scatter simulation algorithm and its use in iterative image reconstruction of PET data. **WERLING A et al.** PHYSICS IN MEDICINE AND BIOLOGY. TALYOR AND FRANCIS LTD, August 2002, vol. 47, 2947-2960
- **A.P. COLIJN ; F.J. BEEKMAN.** Accelerated Simulation of Cone Beam X-Ray Scatter Projections. *IEEE Transactions on Medical Imaging,* Mai 2004, vol. 23 (5
- **M. ENDO ; T. TSUNOO ; N. NAKAMORI ; K. YOSHIDA.** Effect of scattered radiation on image noise in cone-beam CT. *Med. Phys.,* 2001, vol. 28, 469-474
- Modélisation et simulation de systemes d'imagerie par rayons X ou gamma. **N. FREUD.** PhD Thesis. Institut National des Sciences Appliquées de Lyon, 2003
- **Y. KYRIAKOU ; THOMAS RIEDEL ; WILLI A KALENDER.** Combining deterministic and Monte-Carlo calculations for fast estimation of scatter intensities. *Phys. Med. Biol.,* 2006, vol. 51, 4567-4586
- **G.A.F. SEBER.** Multivariate Observations. John Wiley & Sons Inc, 1984